# EUROPÄISCHE PATENTANMELDUNG

(11) **EP 2 893 796 A1**
(43) Veröffentlichungstag der Anmeldung: **15.07.2015**
(21) Anmeldenummer: 14151149.3
(22) Anmeldetag: 14.01.2014
(51) Int. Cl.: A01C 15/00, B60P 1/42

(54) **Landwirtschaftliche Fördervorrichtung sowie landwirtschaftliche Maschine mit Fördervorrichtung**

(71) Anmelder: Köckerling GmbH & Co. KG, 33415 Verl (DE)
(72) Erfinder: Dreesbeimdieke, Hermann, Dipl.-Ing., 33334 Gütersloh (DE)
(74) Vertreter: Hoefer & Partner Patentanwälte mbB

(57) **Zusammenfassung**

Die Erfindung bezieht sich auf eine landwirtschaftliche Fördervorrichtung mit zumindest zwei Schneckenförderern 1, 2, welche im Wesentlichen parallel zueinander angeordnet sind, sowie mit zumindest zwei Einlauftrichtern 3, 4 wobei jedem Schneckenförderer 1, 2 ein separater Einlauftrichter 3, 4 zugeordnet ist, sowie auf eine landwirtschaftliche Maschine, insbesondere eine Drillmaschine mit dieser Fördervorrichtung.

## Beschreibung

Die Erfindung bezieht sich auf eine landwirtschaftliche Fördervorrichtung sowie eine landwirtschaftliche Maschine, welche mit der Fördervorrichtung versehen ist.

Landwirtschaftliche Fördervorrichtungen in Form von Schneckenförderern oder Befüllschnecken sind aus dem Stand der Technik bekannt. Sie werden insbesondere bei großen Drillmaschinen eingesetzt, um diese mit Saatgut, Dünger und/oder Pestiziden zu befüllen. Hierzu besitzen die landwirtschaftlichen Maschinen üblicherweise mehrere Vorratskammern, aus denen die Stoffe (Saat, Dünger, etc.) ausgegeben werden.

Die vorbekannten Schneckenförderer sind so ausgebildet, dass diese als separates Aggregat der landwirtschaftlichen Maschine zugeordnet sind. Der Schneckenförderer mit der Förderschnecke ist als Ganzes frei bewegbar und kann von der Bedienungsperson, beispielsweise mittels eines Schwenkarmes, so positioniert werden, dass die verschiedenen Vorratskammern der landwirtschaftlichen Maschine befüllt werden können. Der Schneckenförderer weist dabei an seinem unteren Ende einen Einlauftrichter auf, in den manuell oder auch von einem Transportfahrzeug der jeweilige Stoff eingefüllt werden kann.

Bei dieser Vorgehensweise erweist es sich als nachteilig, dass die Handhabung des Schneckenförderers eine schwere körperliche Arbeit für die Bedienungsperson darstellt.

Die unterschiedlichen Stoffe müssen nacheinander in die verschiedenen Vorratskammern eingefüllt werden, wobei es zusätzlich vielfach erforderlich ist, die Abdeckungen von den oberen Bereichen der Vorratskammern zu entfernen, bevor das Saatgut, der Dünger oder die Pestizide eingefüllt werden. Nachfolgend ist ein Verschließen der Vorratskammern erforderlich.

Insgesamt ergibt sich somit eine zeitraubende, arbeitsintensive Ausgestaltung, die im Hinblick auf Fehlbedienungen auch störungsanfällig ist.

Der Stand der Technik zeigt weiterhin Lösungen, bei welchen ein Schneckenförderer direkt einer Vorratskammer der landwirtschaftlichen Maschine zugeordnet ist. Bei derartigen Konstruktionen ist es somit nicht möglich, mittels dieses Schneckenförderers mehrere Vorratskammern zu befüllen. Vielmehr sind bei mehreren Vorratskammern voneinander unabhängige Schneckenförderer erforderlich.

Es sind aus dem Stand der Technik auch Schneckenförderer bekannt, bei welchen die Schnecke geteilt oder klappbar ist.

Derartige Konstruktionen sind technisch aufwendig und in der Handhabung umständlich. Zudem besteht die Gefahr, dass Teilmengen der Stoffe unkontrolliert auf den Boden gelangen.

Der Erfindung liegt die Aufgabe zugrunde, eine landwirtschaftliche Fördervorrichtung sowie eine mit dieser auszurüstende, landwirtschaftliche Maschine zu schaffen, welche bei einfachem Aufbau und einfacher, kostengünstiger Herstellbarkeit die Nachteile des Standes der Technik vermeiden und eine sichere Befüllung von Vorratskammern der landwirtschaftlichen Maschine ermöglichen.

Erfindungsgemäß wird die Aufgabe durch die Merkmalskombinationen der nebengeordneten Ansprüche gelöst, die Unteransprüche zeigen jeweils weitere vorteilhafte Ausgestaltungen der Erfindung.

Hinsichtlich der erfindungsgemäßen landwirtschaftlichen Fördervorrichtung ist vorgesehen, dass diese zumindest zwei Schneckenförderer aufweist, welche im Wesentlichen parallel zueinander angeordnet sind. Weiterhin sind zumindest zwei Einlauftrichter vorgesehen, wobei jedem Schneckenförderer ein separater eigener Einlauftrichter zugeordnet ist.

Die erfindungsgemäße Fördervorrichtung zeichnet sich durch eine Reihe erheblicher Vorteile aus. Durch die Kombination mehrerer Schneckenförderer ist es möglich, mehrere Vorratskammern der landwirtschaftlichen Maschine synchron und somit im Wesentlichen zeitgleich zu befüllen. Hierzu dienen die separaten Einlauftrichter, in welche die zu fördernden Stoffe eingefüllt werden. Somit ergibt sich erfindungsgemäß ein hohes Maß an Betriebssicherheit, da eine sichere Zuordnung der einzelnen Stoffe zu den Schneckenförderern gewährleistet ist. Es kann nicht, wie beim Stand der Technik, vorkommen, dass sich Restmengen eines Stoffes noch in der Förderschnecke befinden, während diese einer anderen Vorratskammer zugeordnet wird, um diese andere Vorratskammer mit einem anderen Stoff zu befüllen. Durch die erfindungsgemäße Ausgestaltung wird auch sichergestellt, dass die gesamten Volumina der jeweiligen Stoffe in die jeweilige Vorratskammer gefüllt werden, so dass vermieden wird, dass Teilmengen der Stoffe unkontrolliert auf den Boden fallen. Dies ist insbesondere im Hinblick auf die oben genannten Pestizide (Beizen) von großer Wichtigkeit.

Ein weiterer, wesentlicher Vorteil besteht auch darin, dass die Schneckenförderer so dimensioniert und angeordnet werden können, dass sie exakt zu den Vorratskammern passen, so dass ein Klappen, Schwenken oder ähnliches, so wie dies beim Stand der Technik bekannt ist, nicht erforderlich ist. Es ist insbesondere nicht erforderlich, die Schneckenförderer geteilt auszubilden, um diese zu klappen. Derartige Konstruktionen sind aufwendig und verschleißträchtig und zudem in der Herstellung teuer. Zudem ist es erfindungsgemäß nicht erforderlich, die Enden der Schneckenförderer nach dem Betrieb zusätzlich zu verschließen, so wie dies beim Stand der Technik bei schwenkbaren oder klappbaren Schneckenförderern der Fall ist.

In besonders günstiger Ausgestaltung der Erfindung ist vorgesehen, dass die Schneckenförderer eine gleiche Länge oder unterschiedliche Längen aufweisen. Hierdurch ist eine optimale Anpassung an die baulichen Gegebenheiten der landwirtschaftlichen Maschine möglich. Es wird dabei sichergestellt, dass die Vorratskammern vollständig befüllbar sind, ohne dass die Gefahr besteht, dass die zu fördernden Stoffe austreten oder überlaufen.

Die zumindest zwei Einlauftrichter sind erfindungsgemäß bevorzugterweise miteinander verbunden und bilden somit bevorzugt eine einstückige Baugruppe. Hierdurch kann die Bedienungsperson die Befüllung der Einlauftrichter und damit die Beschickung der Schneckenförderer in einfacher Weise durchführen und überwachen.

Die erfindungsgemäßen Schneckenförderer weisen, so wie dies auch aus dem Stand der Technik bekannt ist, eine Förderschnecke auf, welche eine Schneckenwelle umfasst, die bevorzugt mittels eines hydraulischen Antriebes drehbar ist. Die Schneckenwelle ist mit einem eingängigen oder mehrgängigen Schneckengewinde versehen. Die Förderschnecke selbst ist in einem geschlossenen Rohr angeordnet.

Die erfindungsgemäßen Schneckenförderer können mittels eines gemeinsamen Antriebs oder mittels separater, unabhängiger Antriebe betätigbar sein. Üblicherweise erfolgt der Antrieb hydraulisch. Dabei ist es auch möglich, die Drehzahl der Schnecke den jeweiligen Stoffen anzupassen, um eine optimale Förderung zu erreichen.

Die erfindungsgemäße Fördervorrichtung ist einer landwirtschaftlichen Maschine, insbesondere einer Drillmaschine, zugeordnet, welche zumindest zwei Vorratskammern aufweist. Die Maschine ist somit mit einer gleichen Anzahl an Vorratskammern versehen, wie die Anzahl der unabhängigen Schneckenförderer der Fördervorrichtung. Somit ist sichergestellt, dass die Vorratskammern nacheinander oder gleichzeitig befüllt werden können. Bei Verwendung von zwei Vorratskammern kann eine für das Saatgut und die andere für den Dünger vorgesehen sein.

Abhängig von der Bauart der landwirtschaftlichen Maschine kann es günstig sein, die Schneckenförderer quer zu Längsrichtung der Maschine oder in Längsrichtung der Maschine anzuordnen. Bei der erstgenannten Ausgestaltung sind die Einlauftrichter in einem Seitenbereich der Maschine angeordnet, während bei der zweiten Variante die Einlauftrichter an einem Endbereich der Maschine vorgesehen sind. Die Anordnung der Förderschnecken quer zur Längsachse hat den Vorteil, dass bei fahrender landwirtschaftlicher Maschine eine Befüllung der Einlauftrichter und damit der Vorratskammern möglich ist, welche zudem durch eine Bedienungsperson gut visuell überwacht werden kann. Die Anordnung der Schneckenförderer in Längsrichtung der Maschine hat den Vorteil, dass sich die Gesamtbreite der Maschine nicht erhöht, so dass der Straßentransport einfacher möglich ist. In jedem Falle ist es in betriebssicherer Weise möglich, die Einlauftrichter mittels eines separaten Transportfahrzeuges zu befüllen.

In besonders günstiger Ausgestaltung der Erfindung kann vorgesehen sein, im Bereich der Einlauftrichter eine Kamera anzubringen, um eine optische Überwachung des Befüllvorgangs der Einlauftrichter und damit der Wirkungsweise der Schneckenförderer überwachen zu können. Ein zugeordneter Monitor kann beispielsweise in einer Fahrerkabine eines Schleppers angeordnet sein. Hierdurch wird auch die Manövrierbarkeit der landwirtschaftlichen Maschine verbessert, insbesondere auch beim Rangieren.

Um den Straßentransport zu vereinfachen und/oder um die landwirtschaftliche Maschine besser rangieren oder platzsparender abstellen zu können, kann es vorteilhaft sein, wenn zumindest ein Teil der Fördervorrichtung schwenkbar oder klappbar ausgebildet ist.

Eine weitere, besonders günstige Ausgestaltungsvariante sieht vor, dass Seitenwandungen der Vorratskammern von den jeweiligen Schneckenförderern durchdrungen werden. Hierdurch ist es möglich, die Vorratskammern nach oben hin abzudecken, beispielsweise mittels einer Plane, wodurch jedoch der Befüllvorgang durch die Schneckenförderer nicht beeinträchtigt wird. Die Schneckenrohre der Schneckenförderer können dabei die Ausnehmungen der Vorratskammern so durchdringen, dass diese reibschlüssig geführt sind, so dass Relativbewegungen möglich sind, ohne dass die Gefahr besteht, dass die Stoffe hierbei austreten. Somit können die Schneckenförderer unterhalb der Oberkante der Vorratskammern (Tanks) enden. Mittels der Schneckenförderer ist es möglich, die Stoffe in die Vorratsbehälter entsprechend einzudrücken und diese somit zu befüllen.

Im Folgenden wird die Erfindung anhand eines Ausführungsbeispiels in Verbindung mit der Zeichnung beschrieben. Dabei zeigt:
- Fig. 1: eine vereinfachte Seitenansicht einer erfindungsgemäßen landwirtschaftlichen Maschine mit erfindungsgemäßer Fördervorrichtung,

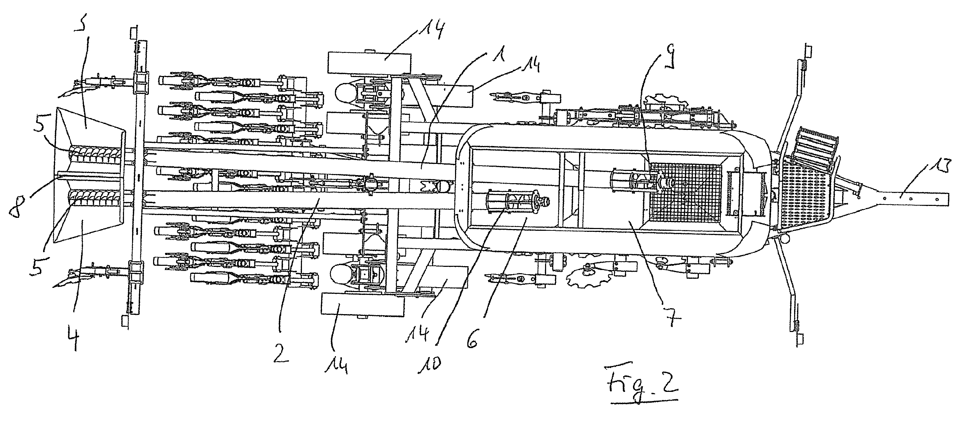

- Fig. 2: eine Draufsicht auf die Maschine gemäß Fig. 1, und

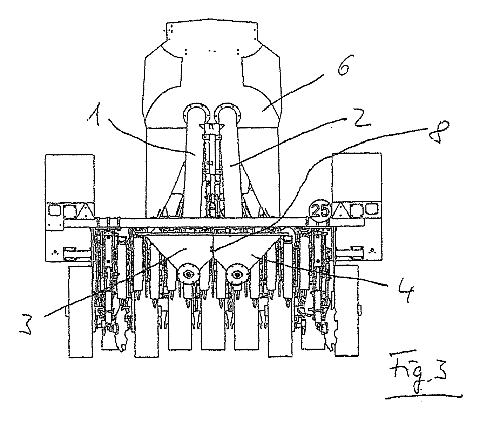

- Fig. 3: eine rückseitige Ansicht der Maschine gemäß den Fig. 1 und 2.

Die erfindungsgemäße landwirtschaftliche Maschine weist zwei in Längsrichtung der Maschine angeordnete, voneinander getrennte Vorratskammern 6 und 7 auf. In die in Fahrtrichtung hinten liegende Vorratskammer 6 mündet ein Schneckenförderer 2, welcher im Wesentlichen parallel zu einem Schneckenförderer 1 angeordnet ist, welcher in einer in Fahrtrichtung vorne liegenden Vorratskammer 7 mündet. Die beiden Schneckenförderer weisen jeweils eine Förderschnecke 5 auf, die in einem Rohr drehbar gelagert ist. Am unteren Ende (Einlaufende) ist jedem Schneckenförderer 1, 2 ein Einlauftrichter 3, 4 zugeordnet. Die beiden Einlauftrichter 3, 4 sind einstückig miteinander ausgebildet und durch eine Trennwand 8 unterteilt, so dass unterschiedliche Stoffe in die Einlauftrichter 3, 4 eingefüllt und mittels der Schneckenförderer 1, 2 in die beiden Vorratskammern 6, 7 einfüllbar sind. Die Schneckenförderer 1, 2 weisen jeweils einen Endbereich 9, 10 auf, bei welchem die Wandung des Schneckenrohres geöffnet ist, um einen Austritt der Stoffe zu gewährleisten.

Die Schneckenförderer 1, 2 sind bevorzugt hydraulisch angetrieben, wobei der hydraulische Antrieb eine parallele Schaltung oder eine Reihenschaltung umfasst. Somit können die Schneckenförderer 1, 2 gleichzeitig oder unabhängig voneinander betätigt werden.

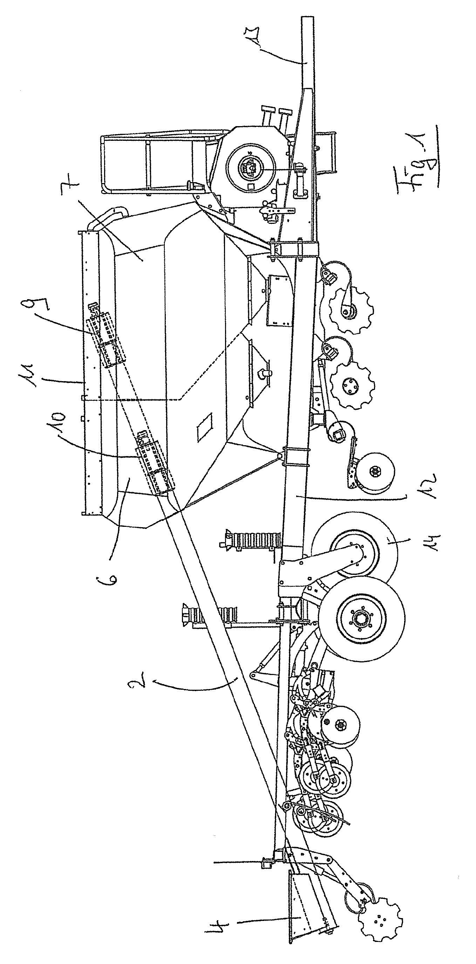

Wie sich aus Fig. 1 ergibt, enden die Schneckenförderer 1, 2 jeweils unterhalb einer Tankabdeckung 11 (Abdeckung der Vorratskammern).

Die landwirtschaftliche Maschine ist als Drillmaschine ausgebildet und umfasst einen Rahmen 12 mit einem Kupplungsbereich 13, so wie dies aus dem Stand der Technik bekannt ist. Der Rahmen 12 läuft auf Rädern 14 und lagert zusätzlich zu den Vorratskammern 6, 7 (Tanks) die benötigten Werkzeugeinheiten, wie etwa Saatgutrohre, Schare, Walzen oder ähnliches. Dies ist aus dem Stand der Technik bekannt, so dass hierauf Bezug genommen werden kann.

### Bezugszeichenliste:

- 1: Schneckenförderer
- 2: Schneckenförderer
- 3: Einlauftrichter
- 4: Einlauftrichter
- 5: Förderschnecke
- 6: Vorratskammer
- 7: Vorratskammer
- 8: Trennwand
- 9: Endbereich
- 10: Endbereich
- 11: Tankabdeckung
- 12: Rahmen
- 13: Kupplungsbereich
- 14: Rad

## Patentansprüche

1. Landwirtschaftliche Fördervorrichtung mit zumindest zwei Schneckenförderern (1, 2), welche im Wesentlichen parallel zueinander angeordnet sind, sowie mit zumindest zwei Einlauftrichtern (3, 4) wobei jedem Schneckenförderer (1, 2) ein separater Einlauftrichter (3, 4) zugeordnet ist.

2. Fördervorrichtung nach Anspruch 1, **dadurch gekennzeichnet, dass** die Schneckenförderer (1, 2) eine gleiche Länge oder unterschiedliche Längen aufweisen.

3. Fördervorrichtung nach Anspruch 1 oder 2, **dadurch gekennzeichnet, dass** die zumindest zwei Einlauftrichter (3, 4) miteinander verbunden sind.

4. Fördervorrichtung nach einem der Ansprüche 1 bis 3, **dadurch gekennzeichnet, dass** die Schneckenförderer (1, 2) mittels eines gemeinsamen Antriebs oder mittels separater unabhängiger Antriebe betätigbar sind.

5. Fördervorrichtung nach Anspruch 4, **dadurch gekennzeichnet, dass** der Antrieb als hydraulischer Antrieb ausgebildet ist.

6. Fördervorrichtung nach einem der Ansprüche 1 bis 5, **dadurch gekennzeichnet, dass** die Schneckenförderer (1, 2) jeweils eine in einem Rohr angeordnete Förderschnecke (5) umfassen.

7. Landwirtschaftliche Maschine, insbesondere Drillmaschine, mit zumindest zwei Vorratskammern (6, 7), **dadurch gekennzeichnet, dass** diese mit einer Fördervorrichtung nach einem der Ansprüche 1 bis 6 versehen ist und jeder Schneckenförderer (1, 2) in einer der Vorratskammern (6, 7) mündet.

8. Maschine nach Anspruch 7, **dadurch gekennzeichnet, dass** die Schneckenförderer (1, 2) in Längsrichtung der Maschine angeordnet sind und die Einlauftrichter (3, 4) an einem Endbereich der Maschine angeordnet sind.

9. Maschine nach Anspruch 7, **dadurch gekennzeichnet, dass** die Schneckenförderer (1, 2) quer zur Längsrichtung der Maschine angeordnet sind und die Einlauftrichter (3, 4) an einem Seitenbereich der Maschine angeordnet sind.

10. Maschine nach einem der Ansprüche 7 bis 9, **dadurch gekennzeichnet, dass** zumindest ein Teil der Fördervorrichtung zum Transport der Maschine schwenkbar oder klappbar ausgebildet ist.
